# FASCICULE DE BREVET EUROPEEN

(11) **EP 1 902 775 B1**
(45) Date de publication et mention de la délivrance du brevet: **26.11.2008**
(21) Numéro de dépôt: 07356121.9
(22) Date de dépôt: 18.09.2007
(51) Int. Cl.: B01F 5/02

(54) **Mélangeur pour enceinte telle qu'une cuve de pulvérisateur, cuve équipée d'un tel mélangeur, et pulvérisateur équipé d'une telle cuve**
Mischer für einen Behälter, wie einen Zerstäuberbehälter, mit einem solchen Mischer ausgestatteter Behälter und mit einem solchen Behälter ausgestatteter Zerstäuber
Mixer for an enclosure such as a sprinkler tank, tank equipped with such a mixer and sprinkler equipped with such a tank

(30) Priorité: 19.09.2006 FR 0653807; 19.09.2006 FR 0653808
(43) Date de publication de la demande: 26.03.2008
(73) Titulaire: EXEL INDUSTRIES, 51200 Epernay (FR)
(72) Inventeur: Ballu, Patrick, 511000 Reims (FR)
(74) Mandataire: Myon, Gérard Jean-Pierre

(56) Documents cités:
- EP-A1- 0 472 860
- DE-C- 607 461
- DE-U1- 9 205 709
- FR-A1- 2 498 082

## Description

La présente invention se rapporte à un mélangeur pour une enceinte telle qu'une cuve d'un pulvérisateur, à une cuve équipée d'un tel mélangeur, et à un pulvérisateur équipé d'une telle cuve.

Comme cela est connu de la technique antérieure, il est utile de placer au fond de la cuve d'un pulvérisateur un ou plusieurs mélangeurs permettant de favoriser le brassage du liquide (couramment appelé « bouillie ») formé par le mélange d'un produit phytosanitaire éventuellement sous forme de poudre mouillable avec de l'eau.

Couramment, on utilise des mélangeurs hydrauliques tels que des mélangeurs à Venturi, alimentés en liquide provenant de la cuve par la pompe du pulvérisateur.

L'utilisation de tels mélangeurs fixes permet d'obtenir des bouillies relativement homogènes.

Toutefois, il demeure un besoin d'amélioration de cette homogénéité entre le haut et le bas du liquide, quel que soit son niveau et sans effet de mousse.

La formation d'une telle mousse est très gênante car lors du remplissage de la cuve, elle risque de déborder et de polluer l'environnement, empêchant ainsi en pratique le remplissage complet de la cuve.

Cette mousse favorise également le désamorçage des mélangeurs hydrauliques et de la pompe de mise en pression, empêchant ainsi de vider complètement la cuve du pulvérisateur pendant les opérations de pulvérisation.

La présente invention a notamment pour but de fournir une telle amélioration.

On atteint ce but de l'invention avec un mélangeur hydraulique mobile pour enceinte telle qu'une cuve de pulvérisateur, comprenant un générateur de jet et un organe de déviation du jet monté pivotant à la sortie dudit générateur entre une position ouverte dans laquelle ledit organe de déviation autorise le passage d'un jet de liquide par ladite sortie, et une position fermée dans laquelle ledit organe de déviation est à même de défléchir ou briser ledit jet, ledit organe de déviation étant conformé de manière à se trouver spontanément en position ouverte sous l'effet de son poids ou de moyens de rappel, et à se trouver en position fermée sous l'effet de l'appui dudit mélangeur sur une surface telle que le fond d'une cuve de pulvérisateur ou d'une baisse du niveau de liquide dans une cuve de pulvérisateur.

Selon d'autres caractéristiques optionnelles de ce mélangeur :
- l'organe de déviation est constitué d'un brise-jet qui présente une surface de déviation apte à agir à l'intérieur du mélangeur hydraulique mobile, de manière à briser le jet;
- l'organe de déviation est constitué d'un déflecteur qui présente une surface de déviation apte à agir à l'extérieur du mélangeur hydraulique mobile, de manière à défléchir le jet ;
- les moyens de rappel sont constitués de moyens de rappel élastique tels qu'un ressort ;
- les moyens de rappel comprennent un flotteur ;
- le générateur de jet est un gicleur intégré à un système du type à Venturi.

La présente invention se rapporte également à un dispositif de brassage du liquide à l'intérieur d'une enceinte telle qu'une cuve de pulvérisateur, comprenant un bras articulé, au moins un mélangeur mobile conforme à ce qui précède et monté sur l'extrémité libre de ce bras et émettant un jet de liquide, et un flotteur apte à orienter ledit bras de manière que ledit au moins un mélangeur mobile demeure à proximité de la surface dudit liquide et que ledit jet demeure orienté sensiblement vers le fond de ladite enceinte.

Lorsqu'un tel dispositif est monté à l'intérieur d'une cuve de pulvérisateur, le mélangeur mobile permet d'instaurer un flux de mélange entre la surface du liquide et le fond de la cuve, particulièrement propice à l'obtention d'un mélange homogène, et ce quel que soit le niveau du liquide.

Le fait que le jet demeure orienté vers le bas permet en outre de limiter, voire de supprimer tout effet de mousse.

Par ailleurs, l'invention a pour objet une cuve de pulvérisation équipée d'au moins un mélangeur hydraulique mobile conforme à ce qui précède.

La présente invention se rapporte également à une cuve de pulvérisation équipée d'un dispositif conforme à ce qui précède, dans laquelle ledit bras articulé est monté sur une paroi de ladite cuve.

Suivant d'autres caractéristiques optionnelles de cette cuve de pulvérisation :
- cette cuve comprend en outre au moins un mélangeur fixe disposé au fond de ladite cuve,
- le mélangeur fixe comprend des moyens pour sélectivement laisser passer ou dévier le jet de liquide qui en sort, selon respectivement que ce mélangeur est immergé dans ou émerge d'un bain dudit liquide,
- ledit au moins un mélangeur fixe comprend une tuyère et lesdits moyens laissant passer ou déviant le jet sont constitués d'un déflecteur monté pivotant à la sortie de ladite tuyère entre une position ouverte dans laquelle ledit déflecteur autorise le libre passage d'un jet de liquide passant par ladite sortie, et une position rabattue dans laquelle ledit déflecteur est à même de dévier ledit jet, ce déflecteur étant muni d'un flotteur apte à le ramener de ladite position rabattue à ladite position ouverte lorsque ledit mélangeur fixe est immergé dans un bain dudit liquide, ledit mélangeur fixe étant positionné de manière que ledit déflecteur se trouve en position ouverte lorsque le niveau de liquide situé dans ladite cuve est supérieur audit mélangeur fixe, et en position rabattue lorsque ledit niveau de liquide est inférieur ou égal audit mélangeur fixe,
- le mélangeur fixe est du type à Venturi et comprend une tuyère à la sortie de laquelle est monté le déflecteur.

Lorsqu'un tel mélangeur fixe est placé à l'intérieur de la cuve d'un pulvérisateur, le jet de liquide qui en sort suit sa trajectoire normale tant que le niveau de liquide à l'intérieur de la cuve est supérieur à celui du mélangeur, permettant ainsi le brassage efficace du mélange situé dans la cuve.

En revanche, dès que le niveau de liquide dans la cuve est inférieur ou égal à celui du mélangeur, les moyens de déviation du jet de liquide ont pour effet de rabattre ce jet vers le fond de la cuve, et de permettre un brassage plus calme au fond de la cuve, évitant la formation de mousse.

La présente invention se rapporte également à un pulvérisateur comprenant une cuve conforme à ce qui précède, comprenant un circuit d'agitation s'étendant entre ladite cuve et lesdits au moins un agitateur mobile et au moins un agitateur fixe, et une pompe apte notamment à faire circuler du liquide dans ledit circuit d'agitation.

D'autres caractéristiques et avantages de la présente invention apparaîtront à la lumière de la description qui va suivre et à l'examen des figures annexées, dans lesquelles :
- la figure 1 représente une vue en perspective d'un pulvérisateur remorqué de l'art antérieur ;
- la figure 2 est une vue en perspective arrachée de la cuve de ce pulvérisateur ;
- la figure 3A est une vue en perspective d'un mélangeur fixe de la technique antérieure équipant le fond de cette cuve ;
- la figure 3B est une vue en coupe de ce mélangeur ;
- la figure 4 est une vue en coupe de ce mélangeur lorsqu'il se trouve partiellement immergé au fond de ladite cuve ;
- la figure 5 est une vue analogue à celle de la figure 4, le mélangeur se trouvant totalement au-dessus du niveau du liquide ;
- la figure 6 est une vue d'un mélangeur fixe selon l'invention se trouvant totalement au dessus du niveau du liquide dans la cuve d'un pulvérisateur ;
- la figure 7A est une vue de ce mélangeur fixe lorsqu'il se trouve complètement immergé à l'intérieur de ladite cuve ;
- la figure 7B est une vue en perspective de ce mélangeur fixe selon l'invention ;
- la figure 8A est une vue en perspective arrachée d'une cuve de pulvérisateur équipée de trois mélangeurs fixes selon l'invention, ceux-ci étant représentés en position rabattue ;
- la figure 8B est une vue analogue à celle de la figure 8, les trois mélangeurs fixes étant représentés en position ouverte ;
- la figure 9 est une vue en coupe d'une cuve équipée d'un dispositif de mélangeurs fixe et mobile selon l'invention, lorsque cette cuve est pleine ;
- la figure 10A est une vue en perspective arrachée de cette cuve pleine ;
- la figure 10B est une vue en perspective arrachée de cette cuve vide ;
- la figure 11 est une vue en perspective du mélangeur mobile selon l'invention ;
- la figure 12 est une vue en coupe de ce mélangeur mobile représenté en position ouverte, et
- la figure 13 est une vue analogue à celle de la figure 12, le mélangeur mobile étant représenté en position fermée.

Dans ce qui va suivre, on va étudier l'invention dans le cadre particulier d'un pulvérisateur agricole remorqué. Il va cependant de soi que cette invention n'est nullement limitée à ce cadre particulier, et qu'elle s'étend à toute situation dans laquelle il convient d'assurer un mélange homogène et sans effet de mousse d'un composé avec un liquide situé à l'intérieur d'une enceinte.

La présente invention s'applique par exemple également aux pulvérisateurs agricoles portés ou automoteurs.

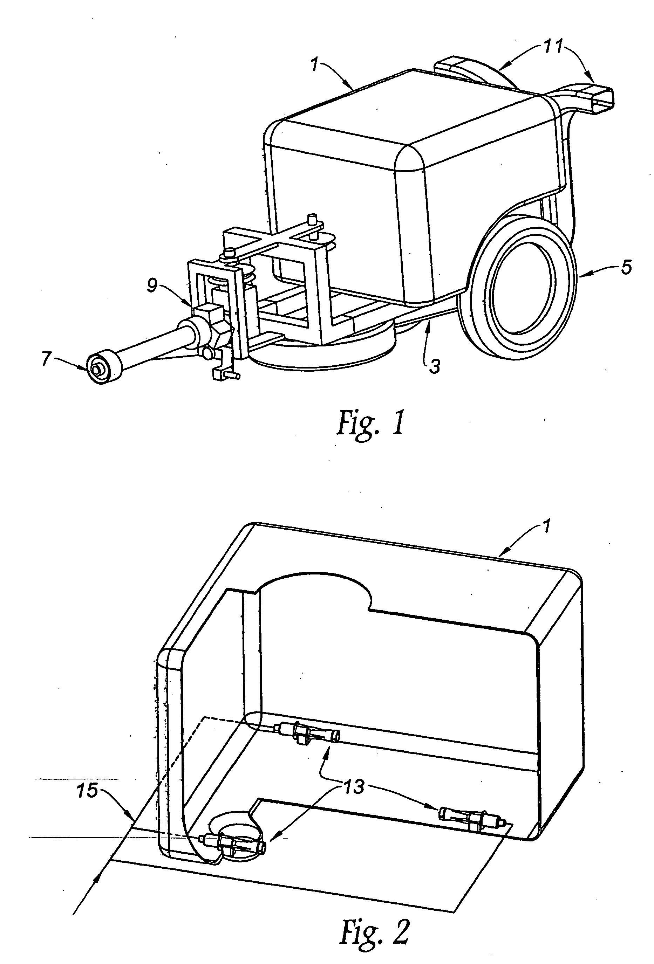

On se reporte à présent à la figure 1 sur laquelle on a représenté un pulvérisateur remorqué de l'état de la technique, comprenant typiquement une cuve de liquide phytosanitaire 1 montée sur un châssis 3 supporté par une paire de roues 5.

Un cardan 7 destiné à être couplé à la prise de force d'un engin tracteur (non représenté) actionne une pompe 9, permettant d'envoyer le liquide situé à l'intérieur de la cuve 1 vers des buses de pulvérisation 11 qui, dans l'exemple représenté, sont des buses à air pulsé.

Comme cela est connu en soi et représenté sur la figure 2, plusieurs mélangeurs 13 sont disposés dans le fond de la cuve 1.

Classiquement ces mélangeurs sont des mélangeurs à Venturi et sont alimentés par un circuit d'agitation 15 dans lequel circule du liquide en provenance de la cuve 1, sous l'action de la pompe 9.

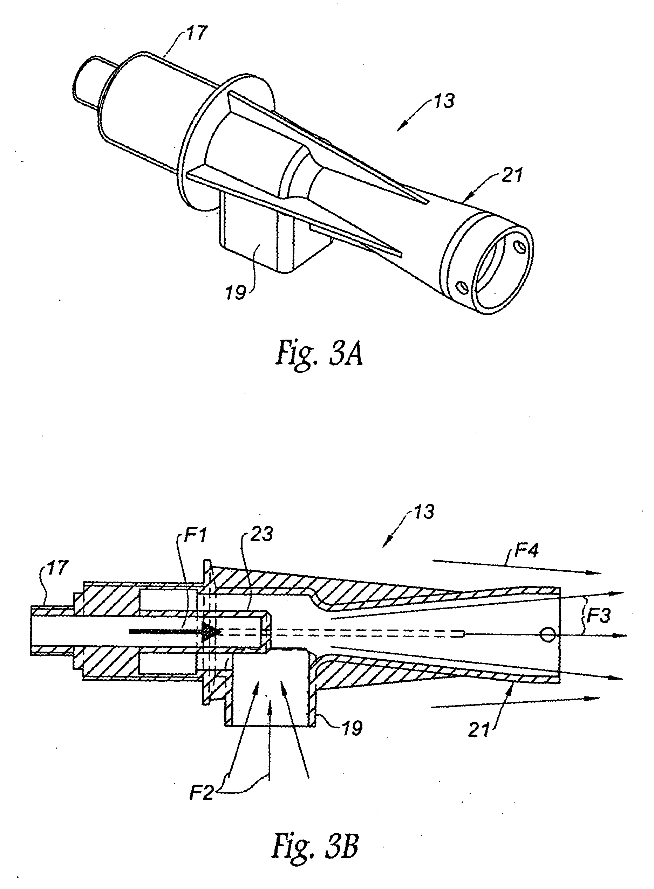

En se reportant aux figures 3A et 3B, on voit que chaque mélangeur fixe 13 comporte typiquement une prise d'entrée 17 connectée au circuit d'agitation 15, une prise d'aspiration 19 et une tuyère de sortie 21.

Un générateur de jet tel qu'un gicleur 23 est disposé à l'intérieur de la tuyère 21 au droit de la prise d'aspiration 19.

Le fonctionnement classique d'un tel mélangeur à Venturi, régi par la loi de Bernoulli, est explicité par les flèches visibles sur la figure 3B : le liquide provenant du circuit d'agitation 15 pénètre dans la prise d'entrée 17, comme cela est indiqué par la flèche F1 ; la circulation de ce liquide à la sortie du gicleur 23 a pour effet, au niveau du rétrécissement de la tuyère 21, d'aspirer le liquide situé dans la cuve par la prise d'aspiration 19 comme cela est indiqué par les flèches F2 ; ces deux fractions de liquide se mélangent pour sortir à haute vitesse de la tuyère de sortie 21 comme cela est indiqué par les flèches F3, entraînant ainsi également du liquide situé à la périphérie extérieure de la tuyère de sortie 21, comme cela est indiqué par les flèches F4.

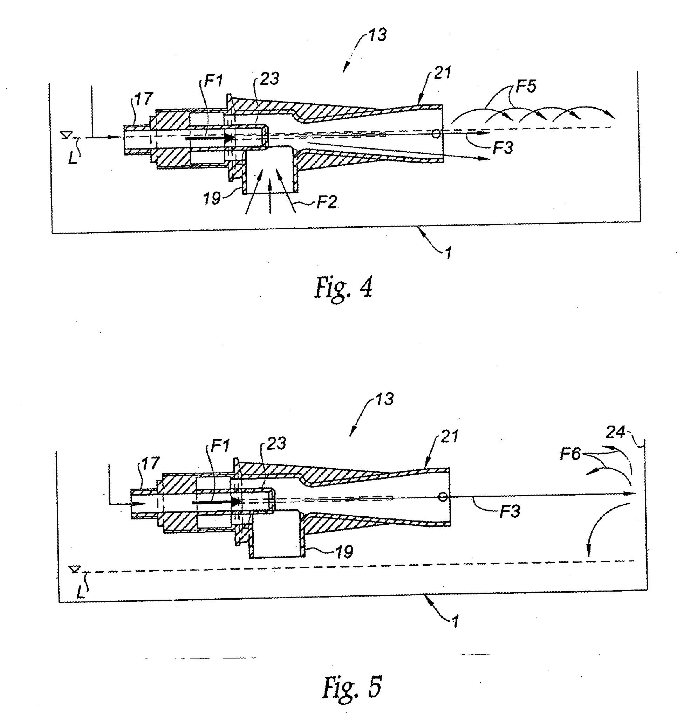

Comme cela est visible sur la figure 4, lorsque le niveau de liquide L à l'intérieur de la cuve 1 est situé sensiblement au niveau de l'ouverture de la tuyère de sortie 21, le jet de liquide sortant de la tuyère 21 tangente avec la surface du liquide L, ce qui engendre une quantité de mousse importante à l'intérieur de la cuve 1, comme cela est symbolisé par les flèches F5.

Lorsque le niveau de liquide L est situé en dessous du mélangeur fixe 13, comme cela est visible sur la figure 5, le jet de liquide sortant de la tuyère 21 vient frapper une paroi latérale 24 de la cuve 1, engendrant là aussi une quantité importante de mousse, comme cela est symbolisé par les flèches F6.

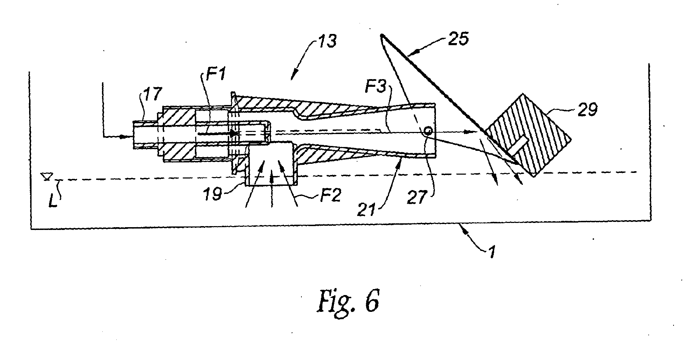

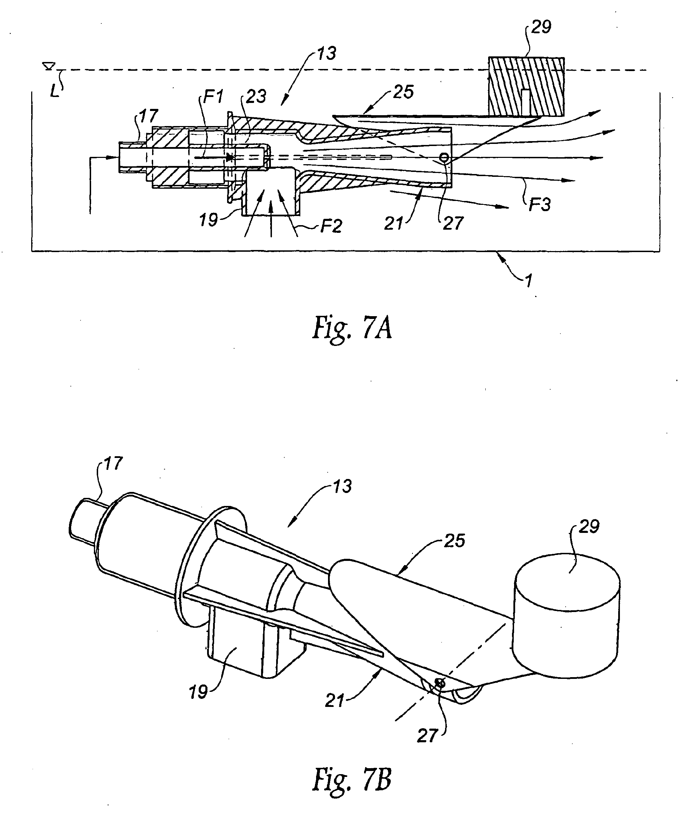

On se reporte à présent aux figures 6 et 7 sur lesquelles on a représenté un mélangeur fixe selon l'invention, représenté dans différentes positions.

Comme cela est visible sur ces figures, ce mélangeur fixe est muni de moyens laissant passer ou déviant le jet F3 selon que le mélangeur est immergé dans ou émerge du liquide L. Ces moyens sont constitués ici d'un déflecteur 25 monté pivotant autour d'un axe 27 sensiblement perpendiculaire à l'axe du mélangeur 13.

Ce déflecteur 25 est muni d'un flotteur 29 disposé de manière que lorsque le mélangeur 13 est totalement immergé dans le liquide L, comme cela est visible à la figure 7A, le déflecteur 25 occupe une position d'ouverture autorisant le libre passage du jet de liquide F3 sortant par la tuyère de sortie 21.

En revanche, lorsque le niveau du liquide L est inférieur à celui du mélangeur 13, comme cela est représenté à la figure 6, le déflecteur 25 bascule sous l'effet du poids du flotteur 29 de manière à occuper une position rabattue dans laquelle ce déflecteur dévie le jet F3 vers le fond de la cuve 1.

Cette déviation a pour effet de permettre un brassage calme du liquide au fond de la cuve 1, sans engendrer de mousse comme dans l'état de la technique antérieure.

On notera qu'en fait, le déflecteur 25 commence à basculer vers sa position rabattue dès la situation représentée à la figure 7A, dans laquelle le mélangeur 13 est situé juste sous la surface du liquide L.

Ainsi, le débit de liquide sortant de la tuyère 21 commence à décroître alors que le mélangeur est encore immergé : ceci est utile, car l'apparition de mousse est en pratique possible avant même que le niveau de liquide ne descende sous le mélangeur.

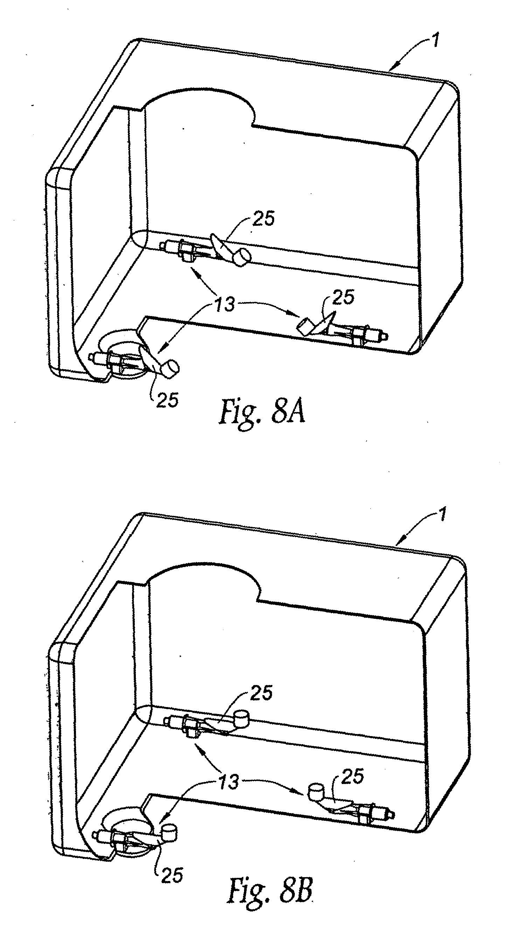

Sur les figures 8A et 8B, on voit que l'on peut équiper le fond de la cuve 1 de trois mélangeurs fixes 13 selon l'invention et représentés respectivement en positions rabattue et ouverte.

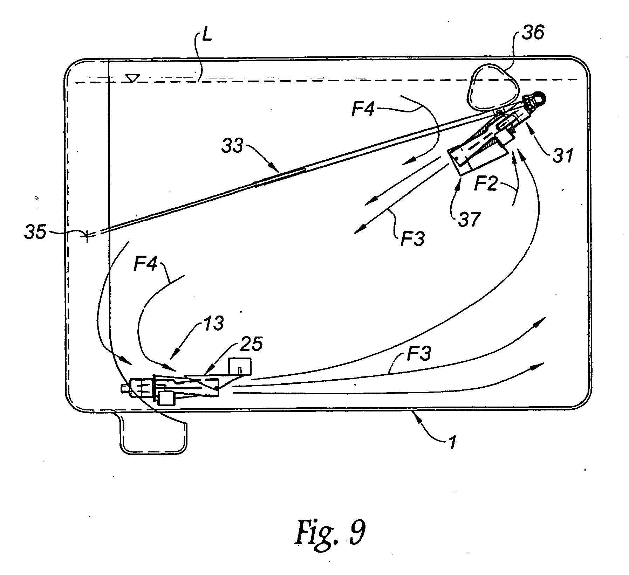

Sur la figure 9, on voit que l'on peut également équiper la cuve 1 d'un mélangeur hydraulique mobile 31 tel qu'un mélangeur à Venturi, fixé à l'extrémité d'un bras 33 monté articulé autour d'un axe 35 à l'intérieur de la cuve 1, un flotteur 36 étant également fixé sur le bras 33 au voisinage du mélangeur mobile 31.

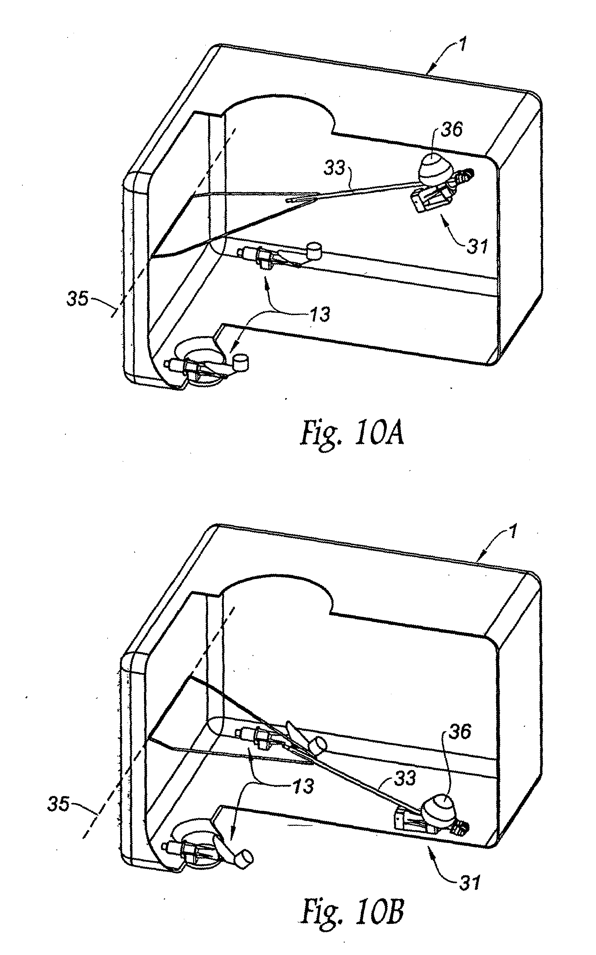

De par la présence de ce flotteur 36, le mélangeur mobile 31 demeure en permanence situé juste sous la surface du liquide L se trouvant à l'intérieur de la cuve 1, ainsi, lorsque cette cuve est pratiquement pleine, comme cela est représenté sur les figures 9 et 10A, le mélangeur mobile 31 est situé dans le haut de la cuve, et lorsque cette cuve est pratiquement vide, comme cela est représenté à la figure 10B, ce mélangeur mobile repose sur le fond de la cuve.

Ce mélangeur mobile est également alimenté par un circuit d'agitation du même type que celui décrit plus haut.

Comme cela est visible sur les figures 9, 10A et 10B, on peut prévoir qu'en plus de cet agitateur mobile 31, la cuve 1 soit équipée d'agitateurs fixes 13 du type de ceux qui ont été mentionnés plus haut.

Dans ce cas, on peut prévoir un circuit d'agitation commun à l'ensemble de ces agitateurs.

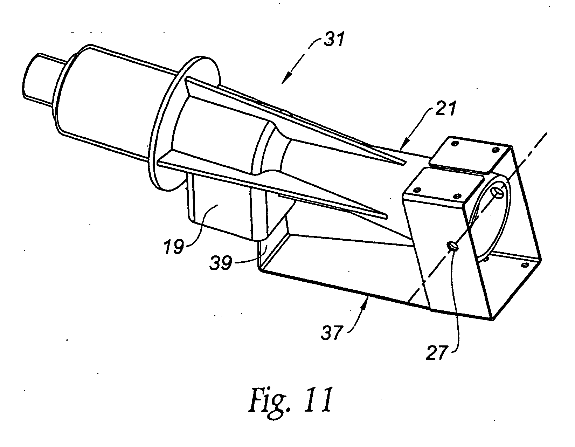

Comme cela est visible sur les figures 11 à 13, l'agitateur mobile 31 peut avantageusement être un agitateur du même type que les agitateurs fixes exposés ci-dessus, c'est-à-dire par exemple un agitateur à Venturi.

De manière avantageuse, on prévoit de monter sur la tuyère de sortie 21, pivotant autour d'un axe 27 perpendiculaire à l'axe de cette tuyère, un organe de déviation du jet F3, constitué en l'occurrence d'un brise-jet 37.

Ce brise-jet comporte une plaque d'obturation 39 pénétrant à l'intérieur de la prise d'aspiration 19 et remplissant la fonction de surface de déviation du jet F3.

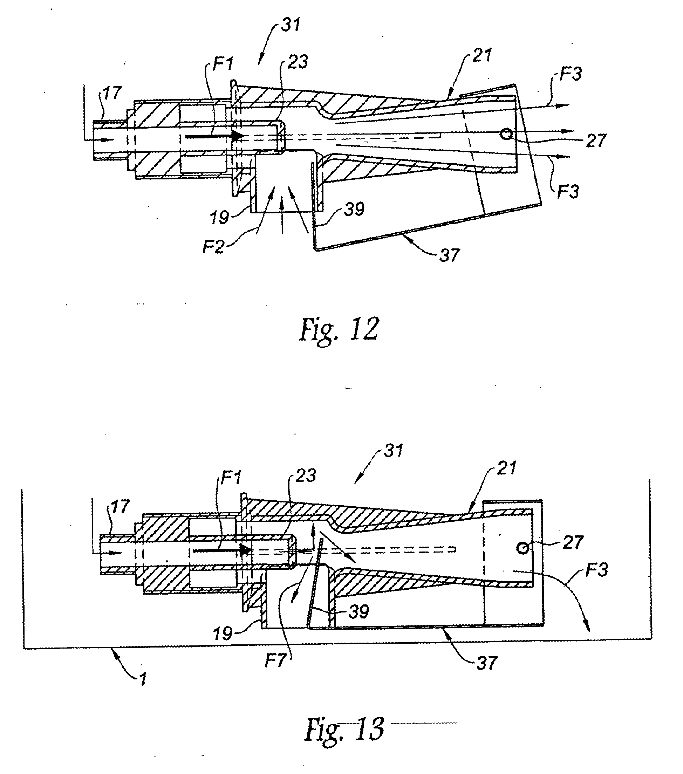

Sous l'effet de son propre poids, éventuellement amplifié ou remplacé par des moyens de rappel élastique tels qu'un ressort, le brise-jet 37 a naturellement tendance à se placer dans la position ouverte visible sur la figure 12, dans laquelle il libère la sortie du gicleur 23, permettant ainsi la sortie normale du liquide par la tuyère de sortie 21.

En revanche, lorsque le mélangeur mobile 31 repose sur le fond de la cuve 1, comme cela est visible à la figure 13, la plaque d'obturation 39 vient se placer devant le gicleur 23, coupant ainsi le jet de liquide sortant du gicleur 23 et orientant ainsi l'essentiel du liquide vers le bas par la prise d'aspiration 19, comme cela est représenté par la flèche F7.

Comme dans le cas des mélangeurs fixes décrits précédemment, cette orientation du jet de liquide vers le fond de la cuve 1 permet un brassage calme du liquide, sans engendrer de mousse comme dans les dispositifs de la technique antérieure.

On notera qu'en fait, la plaque d'obturation 39 commence à basculer vers sa position rabattue dès que le mélangeur mobile 31 est situé juste sous la surface du liquide L.

Ainsi, le débit de liquide sortant de la tuyère 21 commence à décroître alors que le mélangeur est encore immergé.

Comme indiqué précédemment, ceci est utile car l'apparition de mousse est en pratique possible avant même que le niveau de liquide ne descende sous le mélangeur.

Comme cela est visible sur la figure 9, et indiqué par les flèches F2, F3, F4, le mélangeur mobile 31 permet d'instaurer un flux de mélange entre la surface du liquide 1 et le fond de la cuve, particulièrement propice à l'obtention d'un mélange homogène.

Cette homogénéité est encore accentuée si le mélangeur mobile 31 est couplé à un ou plusieurs mélangeurs 13, comme cela est représenté sur la figure 9, lesquels contribuent à l'obtention dudit flux de mélange dans tout le volume de la cuve 1.

Bien entendu, la présente invention n'est nullement limitée aux modes de réalisation décrits et représentés.

C'est ainsi par exemple que l'on peut envisager de placer différemment les mélangeurs fixes à l'intérieur de la cuve 1, soit sur le fond de cette cuve ou sur ses parois latérales, la forme des déflecteurs 25 devant être dans ces derniers cas adaptée.

C'est ainsi également que l'on peut envisager de placer plusieurs mélangeurs mobiles 31 sur le bras articulé 33, ou bien de placer plusieurs tels bras articulés équipés chacun d'un ou plusieurs mélangeurs mobiles à l'intérieur de la cuve 1.

C'est ainsi également que l'on peut envisager d'utiliser tous autres mélangeurs que des mélangeurs à Venturi : il peut s'agir par exemple de simples générateurs de jets tels que des buses, des gicleurs, des rampes à trous en forme de T ou d'arceaux, etc.

C'est ainsi également que l'on peut envisager d'utiliser comme organe de déviation sur le mélangeur mobile 31 un déflecteur semblable au déflecteur 25 équipant le mélangeur fixe à la place du brise-jet 37. Dans ce cas, la surface de déviation de l'organe de déviation agissant sur le jet F3 se trouve à l'extérieur du mélangeur mobile 31. Cela permet de réaliser une déflexion du jet F3 plutôt qu'une demi-coupure.

C'est ainsi également que l'on peut envisager d'utiliser le flotteur 29 comme moyen de rappel de l'organe de déviation en position ouverte. Dans ce cas, c'est l'effet de la baisse du niveau de liquide L dans la cuve 1 qui agit sur l'organe de déviation, tel que le déflecteur 25, lequel est alors entraîné vers sa position fermée.

## Revendications

1. Mélangeur hydraulique mobile (31) pour enceinte telle qu'une cuve (1) de pulvérisateur, comprenant un générateur de jet (23) et un organe de déviation du jet (37 ; 25) monté pivotant à la sortie dudit générateur (23) entre une position ouverte dans laquelle ledit organe de déviation (37 ; 25) autorise le passage d'un jet de liquide (F3) par ladite sortie, et une position fermée dans laquelle ledit organe de déviation (37 ; 25) est à même de défléchir ou de briser ledit jet (F3), ledit organe de déviation étant conformé de manière à se trouver spontanément en position ouverte sous l'effet de son poids ou de moyens de rappel (29), et à se trouver en position fermée sous l'effet de l'appui dudit mélangeur (31) sur une surface telle que le fond d'une cuve (1) de pulvérisateur ou d'une baisse du niveau de liquide (L) dans une cuve (1) de pulvérisateur.

2. Mélangeur hydraulique mobile (31) selon la revendication 1, dans lequel l'organe de déviation est constitué d'un brise-jet (37) qui présente une surface de déviation apte à agir à l'intérieur du mélangeur hydraulique mobile (31), de manière à briser le jet (F3).

3. Mélangeur hydraulique mobile (31) selon la revendication 1, dans lequel l'organe de déviation (25) est constitué d'un déflecteur (25) qui présente une surface de déviation apte à agir à l'extérieur du mélangeur hydraulique mobile (31), de manière à défléchir le jet (F3).

4. Mélangeur hydraulique mobile (31) selon l'une des revendications précédentes, dans lequel lesdits moyens de rappel sont constitués de moyens de rappel élastique tels qu'un ressort.

5. Mélangeur hydraulique mobile (31) selon l'une des revendications 1 à 3, dans lequel les moyens de rappel comprennent un flotteur (29).

6. Mélangeur selon l'une des revendications précédentes, dans lequel ledit générateur de jet (23) est un gicleur intégré à un système du type à Venturi.

7. Dispositif de brassage du liquide à l'intérieur d'une enceinte telle qu'une cuve de pulvérisateur, comprenant un bras articulé (33), au moins un mélangeur mobile (31) conforme à l'une des revendications précédentes monté sur l'extrémité libre de ce bras et émettant un jet de liquide, et un flotteur (36) apte à orienter ledit bras (33) de manière que ledit au moins un mélangeur mobile (31) demeure à proximité de la surface dudit liquide et que ledit jet demeure orienté sensiblement vers le fond de ladite enceinte.

8. Cuve de pulvérisation (1) équipée d'au moins un mélangeur hydraulique mobile (31) conforme à l'une des revendications 1 à 6.

9. Cuve de pulvérisation (1) équipée d'un dispositif selon la revendication 7, dans laquelle ledit bras articulé (33) est monté sur une paroi de ladite cuve (1).

10. Cuve de pulvérisation (1) selon la revendication 8 ou 9, comprenant en outre au moins un mélangeur fixe (13) disposé au fond de ladite cuve (1).

11. Cuve de pulvérisation (1) selon la revendication 10, dans laquelle ledit au moins un mélangeur fixe (13) comprend des moyens (25) pour sélectivement laisser passer ou dévier le jet de liquide (F3) qui en sort, selon respectivement que ce mélangeur est immergé dans ou émerge d'un bain dudit liquide.

12. Cuve de pulvérisation (1) selon la revendication 11, dans laquelle ledit au moins un mélangeur fixe (13) comprend une tuyère (21) et dans laquelle lesdits moyens (25) laissant passer ou déviant le jet (F3) sont constitués d'un déflecteur (25) monté pivotant à la sortie de ladite tuyère (21) entre une position ouverte dans laquelle ledit déflecteur (25) autorise le libre passage d'un jet de liquide (F3) passant par ladite sortie, et une position rabattue dans laquelle ledit déflecteur (25) est à même de dévier ledit jet, ce déflecteur (25) étant muni d'un flotteur (29) apte à le ramener de ladite position rabattue à ladite position ouverte lorsque ledit mélangeur fixe (13) est immergé dans un bain dudit liquide, ledit mélangeur fixe (13) étant positionné de manière que ledit déflecteur (25) se trouve en position ouverte lorsque le niveau de liquide (L) situé dans ladite cuve (1) est supérieur audit mélangeur fixe (13), et en position rabattue lorsque ledit niveau de liquide (L) est inférieur ou égal audit mélangeur fixe (13).

13. Cuve de pulvérisation (1) selon la revendication 12, dans laquelle ledit au moins un mélangeur fixe (13) est du type à Venturi et comprend une tuyère (21) à la sortie de laquelle est monté ledit déflecteur (25).

14. Pulvérisateur comprenant une cuve (1) conforme à l'une quelconque des revendications 8 à 13, comprenant un circuit d'agitation (15) s'étendant entre ladite cuve (1) et lesdits au moins un mélangeur mobile (31) et au moins un mélangeur fixe (13), et une pompe (9) apte notamment à faire circuler du liquide dans ledit circuit d'agitation (15).

## Claims

1. Movable hydraulic mixer (31) for an enclosure such as a sprayer tank (1), comprising a jet generator (23) and a jet-deviating member (37; 25) mounted to pivot at the outlet of the said generator (23) between an open position in which the said deviating member (37; 25) allows the passage of a liquid jet (F3) through the said outlet, and a closed position in which the said deviating member (37; 25) is able to deflect or break the said jet (F3), the said deviating member being shaped so as to be spontaneously in the open position under the effect of its weight and of return means (29), and in the closed position under the effect of the bearing of the said mixer (31) on a surface such as the bottom of a sprayer tank (1) or a lowering of the liquid level (L) in a sprayer tank (1).

2. Movable hydraulic mixer (31) according to Claim 1, in which the deviating member is formed by a jet breaker (37) which has a deviating surface capable of acting inside the movable hydraulic mixer (31) so as to break the jet (F3).

3. Movable hydraulic mixer (31) according to Claim 1, in which the deviating member (25) is formed by a deflector (25) which has a deviating surface capable of acting outside the movable hydraulic mixer (31) so as to deflect the jet (F3).

4. Movable hydraulic mixer (31) according to one of the preceding claims, in which the said return means are formed by elastic return means such as a spring.

5. Movable hydraulic mixer (31) according to one of Claims 1 to 3, in which the return means comprise a float (29).

6. Mixer according to one of the preceding claims, in which the said jet generator (23) is a spray nozzle integrated in a Venturi-type system.

7. Device for mixing the liquid inside an enclosure such a sprayer tank, comprising an articulated arm (33), at least one movable mixer (31) according to one of the preceding claims, mounted on the free end of this arm and emitting a liquid jet, and a float (36) capable of orienting the said arm (33) so that the said at least one movable mixer (31) remains close to the surface of the said liquid and that the said jet remains oriented substantially towards the bottom of the said enclosure.

8. Spraying tank (1) equipped with at least one movable hydraulic mixer (31) according to one of Claims 1 to 6.

9. Spraying tank (1) equipped with a device according to Claim 7, in which tank the said articulated arm (33) is mounted on a wall of the said tank (1).

10. Spraying tank (1) according to Claim 8 or 9, further comprising at least one fixed mixer (13) arranged at the bottom of the said tank (1).

11. Spraying tank (1) according to Claim 10, in which the said at least one fixed mixer (13) comprises means (25) for selectively allowing the passage of or deviating the liquid jet (F3) exiting therefrom, depending respectively on whether this mixer is submerged in or emerges from a bath of the said liquid.

12. Spraying tank (1) according to Claim 11, in which the said at least one fixed mixer (13) comprises a nozzle (21) and in which the said means (25) allowing the passage of or deviating the jet (F3) are formed by a deflector (25) mounted to pivot at the outlet of the said nozzle (21) between an open position in which the said deflector (25) allows the free passage of a liquid jet (F3) passing through the said outlet, and a turned-down position in which the said deflector (25) is able to deviate the said jet, this deflector (25) being provided with a float (29) capable of returning it from the said turned-down position to the said open position when the said fixed mixer (13) is submerged in a bath of the said liquid, the said fixed mixer (13) being positioned so that the said deflector (25) is in the open position when the liquid level (L) in the said tank (1) is higher than the said fixed mixer (13), and a turned-down position when the said liquid level (L) is lower than or equal to the said fixed mixer (13).

13. Spraying tank (1) according to Claim 12, in which the said at least one fixed mixer (13) is of the Venturi type and comprises a nozzle (21) at the outlet of which the said deflector (25) is mounted.

14. Sprayer comprising a tank (1) according to any one of Claims 8 to 13, comprising an agitating circuit (15) extending between the said tank (1) and the said at least one movable mixer (31) and the said at least one fixed mixer (13), and a pump (9) capable, in particular, of circulating the liquid in the said agitating circuit (15).

## Patentansprüche

1. Beweglicher hydraulischer Mischer (31) für einen Innenraum, wie für einen Tank (1) eines Zerstäubers, umfassend einen Strahlerzeuger (23) und ein Umleitungsorgan für den Strahl (37; 25), das am Auslass des Erzeugers (23) zwischen einer Offenstellung, in der das Umleitungsorgan (37; 25) den Durchgang eines Strahls der Flüssigkeit (F3) durch den Auslass ermöglicht, und einer Geschlossenstellung, in der das Umleitungsorgan (37; 25) den Strahl (F3) umlenkt oder bricht, drehbar befestigt ist, wobei das Umleitungsorgan so angepasst ist, dass es sich spontan unter der Wirkung seines Gewichts oder von Rückstellmitteln (29) in Offenstellung befindet und sich unter der Wirkung des Aufliegens des Mischers (31) auf einer Fläche, wie dem Boden eines Tanks (1) des Zerstäubers, oder eines Rückgangs des Niveaus der Flüssigkeit (L) in einem Tank (1) des Zerstäubers in Geschlossenstellung befindet.

2. Beweglicher hydraulischer Mischer (31) nach Anspruch 1, in dem das Umleitungsorgan durch einen Strahlbrecher (37) gebildet ist, der eine Umleitungsfläche aufweist, die geeignet ist, im Inneren des beweglichen hydraulischen Mischers (31) zu wirken, um den Strahl (F3) zu brechen.

3. Beweglicher hydraulischer Mischer (31) nach Anspruch 1, in dem das Umleitungsorgan (25) durch ein Ablenkelement (25) gebildet ist, das eine Umleitungsfläche aufweist, die geeignet ist, außerhalb des beweglichen hydraulischen Mischers (31) zu wirken, um den Strahl (F3) abzulenken.

4. Beweglicher hydraulischer Mischer (31) nach einem der vorhergehenden Ansprüche, in der die Rückstellmittel durch elastische Rückstellmittel, wie eine Feder, gebildet sind.

5. Beweglicher hydraulischer Mischer (31) nach einem der Ansprüche 1 bis 3, bei dem die Rückstellmittel einen Schwimmer (29) umfassen.

6. Mischer nach einem der vorhergehenden Ansprüche, in welchem der Strahlerzeuger (23) eine Düse ist, die in ein System des Typs Venturi integriert ist.

7. Vorrichtung zum Umlaufen-Lassen einer Flüssigkeit in einem Innenraum, wie einem Tank eines Zerstäubers, umfassend einen angelenkten Arm (33), mindestens einen beweglichen Mischer (31) entsprechend einem der vorhergehenden Ansprüche, befestigt an dem freien Ende dieses Arms und einen Strahl der Flüssigkeit aussendend, und einen Schwimmer (36), der den Arm (33) so ausrichten kann, dass der zumindest eine bewegliche Mischer (31) in der Nähe der Oberfläche der Flüssigkeit bleibt und dass der Strahl im Wesentlichen zum Boden des Innenraums gerichtet bleibt.

8. Tank eines Zerstäubers (1), versehen mit zumindest einem beweglichen hydraulischen Mischer (31) gemäß einem der Ansprüche 1 bis 6.

9. Tank eines Zerstäubers (1), versehen mit einer Vorrichtung nach Anspruch 7, bei dem der angelenkte Arm (33) an einer Wand des Tanks (1) befestigt ist.

10. Tank eines Zerstäubers (1) nach Anspruch 8 oder 9, der außerdem mindestens einen am Boden des Tanks (1) angeordneten festen Mischer (13) umfasst.

11. Tank eines Zerstäubers (1) nach Anspruch 10, in welchem der mindestens eine feste Mischer (13) Mittel (25) umfasst, um selektiv den Strahl der Flüssigkeit (F3), der daraus austritt, durchzulassen oder umzuleiten, je nachdem, ob dieser Mischer in einem Bad der Flüssigkeit untergetaucht ist oder daraus hervorragt.

12. Tank eines Zerstäubers (1) nach Anspruch 11, in dem der zumindest eine feste Mischer (13) eine Düse (21) umfasst und in dem die Mittel (25), die den Strahl (F3) durchlassen oder umleiten, durch ein Ablenkelement (25) gebildet sind, das am Auslass der Düse (21) zwischen einer Offenstellung, in der das Ablenkelement (25) den freien Durchgang eines Strahls der Flüssigkeit (F3), der durch diesen Auslass strömt, zulässt, und einer abgesenkten Stellung, in der das Ablenkelement (25) zum Umleiten des Strahls dient, drehbar befestigt ist, wobei das Ablenkelement (25) mit einem Schwimmer (29) versehen ist, der dieses von der abgesenkten Stellung in die Offenstellung umstellen kann, wenn der feste Mischer (13) in einem Bad der Flüssigkeit untergetaucht wird, wobei der feste Mischer (13) so angeordnet ist, dass sich das Ablenkelement (25) in Offenstellung befindet, wenn das Niveau der in dem Tank (1) befindlichen Flüssigkeit (L) über dem festen Mischer (13) liegt, und in abgesenkter Stellung, wenn das Niveau der Flüssigkeit (L) unterhalb oder gleich dem festen Mischer (13) liegt.

13. Tank eines Zerstäubers (1) nach Anspruch 12, in welchem der mindestens eine feste Mischer (13) vom Typ Venturi ist und eine Düse (21) umfasst, an deren Auslass das Ablenkelement (25) befestigt ist.

14. Zerstäuber umfassend einen Tank (1) nach einem der Ansprüche 8 bis 13, umfassend einen Agitationskreislauf (15), der sich zwischen dem Tank (1) und dem zumindest einen beweglichen Mischer (31) und dem zumindest einen festen Mischer (13) erstreckt, und eine Pumpe (9), die insbesondere geeignet ist, die Flüssigkeit in dem Agitatiionskreislauf (15) zirkulieren zu lassen.
